Europäisches Patentamt

European Patent Office

Office européen des brevets

(11) Publication number: **0 141 469**
**B1**

## EUROPEAN PATENT SPECIFICATION

(45) Date of publication of patent specification: **24.02.88**

(51) Int. Cl.⁴: **A 01 G 17/14,** A 01 G 17/08

(21) Application number: **84201577.8**

(22) Date of filing: **01.11.84**

(54) A trellis stake and wire support to be used in connection with such a trellis stake.

(30) Priority: **02.11.83 FR 8317380**

(43) Date of publication of application:
**15.05.85 Bulletin 85/20**

(45) Publication of the grant of the patent:
**24.02.88 Bulletin 88/08**

(84) Designated Contracting States:
**AT BE CH DE GB IT LI LU NL SE**

(56) References cited:
**FR-A-2 082 656**
**FR-A-2 273 143**
**FR-A-2 500 258**

(73) Proprietor: **WAVIN B.V.**
**Händellaan 251**
**NL-8031 EM Zwolle (NL)**
(73) Proprietor: **B.V. SOME-VENA**
**Utrechtseweg 113**
**NL-1213 TN Hilversum (NL)**

(72) Inventor: **Ettema, Ernst**
**9 Elzenlaan**
**NL-7771 DJ Hardenberg (NL)**
Inventor: **de Vries, Jan**
**c/o 113 Utrechtseweg**
**NL-1213 TN Hilversum (NL)**

(74) Representative: **van der Veken, Johannes**
**Adriaan et al**
**EXTERPATENT B.V. Willem Witsenplein 4**
**NL-2596 BK 's-Gravenhage (NL)**

## Description

The present invention relates to a wire support for use with a plastic trellis stake comprising ribs forming protuberances and running in the longitudinal direction of said stake for receiving rows of tensioned wires for supporting tendrils and twigs of plants, said wire support comprising two separate parts, a first part being provided with at least one seat for a protuberance of a rib and the second part cooperating with the first part fastening in a pinching fashion the first part to the stake.

Such a wire support is known from FR—A— 2 273 143. The known wire support comprises a first part with a seat for one protuberance of a rib and a second part in the form of a wedge-shaped pin which is to be driven between the bottom of the seat and the protuberance of the rib in order to fasten the first part of the wire support to the stake.

This prior art structure has a number of disadvantages. In order to fasten the wire support to the stake the first part has to be slid along the protuberance of the rib in axial direction over a certain part of the length of the rib. The fixation of the wire support by means of the small wedge-shaped pin is not reliable, as the pin can easily get loose and/or the cooperating faces of the rib and the first part of the wire support may deform. Moreover, when more than one wire support are disposed on the same rib, an intermediate wire support can hardly be removed from the stake without removing other wire supports of the stake. Finally the small fixation pin may easily be lost.

It is the object of the invention to provide a wire support which does not present the above mentioned disadvantages of the prior art wire support.

This object is achieved by a wire support which is characterized in that the first part is flexible and is provided with a recess for receiving a major portion of the cross section of the stake, the recess being bounded by two arms, the free end portions of said arms having seats for the protuberances of the ribs of the stake at the inner side and having wedge faces at the outer side, the first part being resiliently engageable about the stake so that the arms will hold the first part to the stake, and that the second part is rigid and has an open end mouth having wedge faces at the inner side cooperating with the wedge faces of the first part to form a slide wedge fit between the first and second part.

The wire support according to the present invention can be fastened easily to the stake by disposing the flexible first part in transverse direction onto the stake and sliding the rigid second part onto the first part, the wedge faces on both parts providing the wedge fit between the first and second part and a tight fit of the wire support on the stake. The fixation of the wire support is therefore very reliable. Moreover, the height of the wire support can be adjusted easily. When a wire support gets damaged it can be simply removed from the stake without displacement of other wire supports on the stake.

The present invention will be further explained in the following description of a preferred embodiment with reference to the drawings.

Fig. 1 is a perspective view of part of a trellis stake with a wire support fastened thereto;

Fig. 2 is a cross-section of a trellis stake with a top plan view of a wire support; and

Fig. 3 is a similar cross-section with wire support as shown in Fig. 2 but in modified embodiment.

According to the invention a plastic trellis stake made of fiber-reinforced material is provided with ribs 1a and 1b, forming protuberances running in the longitudinal direction. The ribs forming protuberances are edges of flanges 2a and 2b running in the longitudinal direction of the stake. As the plastic stake is made of fiber-reinforced material, reinforcing threads 3 are provided in the protuberances of the ribs. However, reinforcing threads can also be embedded over the entire cross-section of the stake as indicated by reference numeral 3b, whilst in the protuberances of the ribs additional reinforcing threads have also been embedded. As appears from the drawing the protuberances of the ribs have been situated at that point with regard to the cross-section of the stake, where the distance from the outermost fiber layer to the neutral line of a given cross section area is the utmost to achieve the greatest possible moment of resistance. It will be evident that a trellis stake which is designed for withstanding the forces applied onto it, can, in a smaller size, also be used as a picket for straightening the trunk of a grape vine, as it is ensured, due to its great resistance that the trunk will be retained in a straight manner whilst, owing to this flat part at the flanges 2b, it will not damage the trunk.

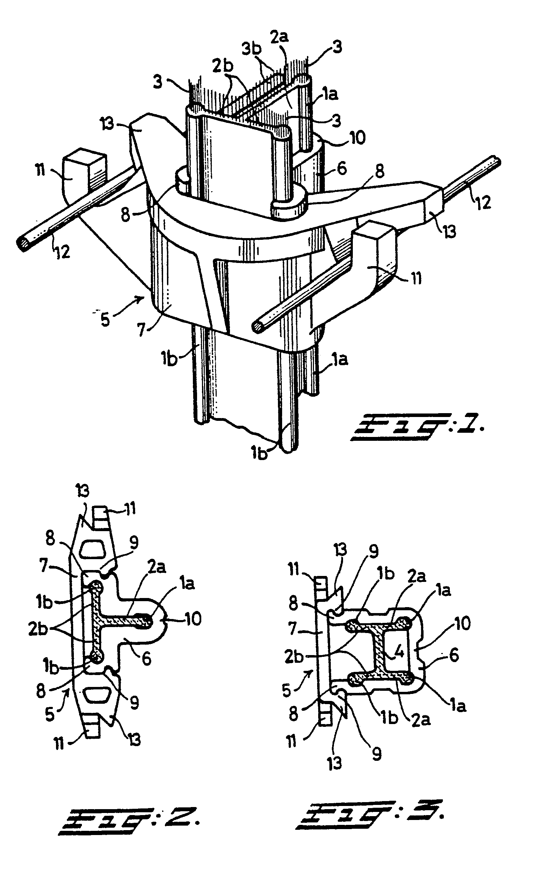

The wire support generally referenced 5, is also made of plastic and comprises a clamp to be situated around the trellis stake, one part 6 of the clamp comprises one or more seats for the protuberances of the ribs 1a and 1b, and has a configuration which allows it to exert a pinching action on the protuberances 1a, 1b of the ribs situated in the seats, when this part 6 is fastened to the other part 7 of the clamp. The seats are formed at least partly complementary to the protuberances of the ribs of the stake and, in a tensioned condition of the clamp, the seats lay tightly around the protuberances. The clamp is formed of two separate parts 6, 7 and free ends 8 of part 6 of the clamp and provided with one or more seats, co-operating with wedge faces of the other part 7 of the clamp and which can be diverged on the free ends of part 6 (Fig. 2). The angle of inclination of the wedge faces is such that these faces are self-locking and will therefore not get disengaged when a small pressure is exerted, opposed to the closing pressure for the clamp. The wedge faces are positioned in such a manner that, when exerting a downward force on part 7, this force will cause an increasing clamping action. The shape of the wedge faces need not be explained because this will be evident, as the wedge face at the free ends 8 of part 6 of the clamp and the engaging faces 9 of part 7 diverge in a downward direction. Part 6 of the clamp provided with seats is made of resilient plastic material, part 7 of the clamp embracing the ends 8 is made of rigid plastic material so as to retain its shape. Part 6 comprising seats of thermoplastic material is provided with a weakened portion 10 in the middle of the clamp, for bending open and closing this portion (Fig. 3). Weakened portion 10 can be considered to be a hinge during closing the clamp, owing to which a great pinching force is exerted on the protuberances 1a and 1b. Form-stabile part 7 of the clamp comprises one or more hooks 11 for engaging a wire 12. Nearby hook 11 a cam 13 is provided for keeping the wire down within the hook. This is of importance to prevent the wire from getting lifted out of the hook in case gusts of wind are exerted on the grape vine with its foliage, but, more particularly, during mechanical grape gathering, which operation entails a plurality of machine fingers, moving rapidly in an upward and downward manner along the trellis for shaking the grapes from the tendrils. Cam 13 laterally projects from the top of hook 11 which is of importance in case the trellis stakes are situated on a steep slope, as the wire needs then not to be bent and can be easily stretched. Cam 13 is in that event to be situated at the lower side of the slope. The trellis stake can be used as end stake and an additional wire support is used for sliding therearound an achoring wire for the end stake.

Considering the above, there is provided according to the invention an assembly of a trellis stake with a wire support, which stake is provided with a number of wire supports 5 a part 6 of each wire support having a cross-sectional shape adapted to the cross-section of the stake and having a configuration for enclosing the ribs of the stake provided with protuberances.

## Claims

1. A wire support for use with a plastic trellis stake comprising ribs (1a, 1b) forming protuberances and running in the longitudinal direction of said stake for receiving rows of tensioned wires for supporting tendrils and twigs of plants, said wire support comprising two separate parts (6 and 7), a first part (6) being provided with at least one seat for a protuberance of a rib and the second part (7) cooperating with the first part (6) fastening in a pinching fashion the first part (6) to the stake, characterized in that the first part (6) is flexible and is provided with a recess for receiving a major portion of the cross section of the stake, the recess being bounded by two arms, the free end portions (8) of said arms having seats for the protuberances of the ribs (1b) of the stake at the inner side and having wedge faces at the outer side, the first part being resiliently engageable about the stake so that the arms will hold the first part (6) to the stake and that the second part (7) is rigid and has an open end mouth having wedge faces (9) at the inner side cooperating with the wedge faces of the first part (6) to form a slide wedge fit between the first and second part.

2. A wire support according to claim 1, characterized in that said wire support (5) comprises at least one of the following features:

a) the flexible first part (6) consists of thermoplastic material;

b) the flexible first part (6) comprises a weakened portion (10) in its middle, permitting opening and tight bending of said part;

c) the rigid second part (7) is provided with at least one hook (11) for supporting a wire (12);

d) the rigid second part (7) is provided with at least one hook (11) for supporting a wire (12) and a cam (13) for keeping down the wire (12) within said hook;

e) the rigid second part (7) is provided with at least one hook (11) for supporting a wire (12) and a cam (13) being provided nearby the hook (11) for keeping down the wire (12) within said hook, said cam (13) laterally projecting from the top of the hook (11).

## Patentansprüche

1. Drahthalter zur Verwendung an einem Kunststoffspalierpfahl mit Vorsprünge bildenden und in Längsrichtung des Pfahls verlaufenden Rippen (1a, 1b) für eine Aufnahme von Reihen gespannter Drähte zur Abstützung von Ranken und Zweigen von Pflanzen, wobei der Drahthalter zwei gesonderte Teile (6 und 7) umfaßt, ein erster Teil (6) mit zumindest einem Sitz für einen Vorsprung einer Rippe versehen ist und der zweite Teil (7) mit dem ersten Teil (6) zusammenwirkt und den ersten Teil (6) durch eine Klemmbefestigung am Pfahl festlegt, dadurch gekennzeichnet, daß der erste Teil (6) flexibel und mit einer Ausnehmung zur Aufnahme eines Hauptteils des Pfahlquerschnitts versehen ist, die Ausnehmung von zwei Armen begrenzt ist, die freien Endbereiche (8) der Arme Sitze für die Vorsprünge der Rippen (1b) des Pfahls an der Innenseite aufweisen und Keilflächen an der Außenseite besitzen, der erste Teil ferner mit dem Pfahl federnd in Eingriff bringbar ist, so daß die Arme den ersten Teil (6) am Pfahl halten, und daß der zweite Teil (7) starr ist und eine offene Endmündung mit Keilflächen (9) an der Innenseite aufweist, die mit den Keilflächen des ersten Teils (6) zur Ausbildung eines Gleitkeilsitzes zwischen dem ersten und dem zweiten Teil zusammenwirken.

2. Drahthalter nach Anspruch 1, dadurch gekennzeichnet, daß der Drahthalter (5) zumindest eines der folgenden Merkmale aufweist:

a) der flexible erste Teil (6) besteht aus thermoplastischem Material;

b) der flexible erste Teil (6) umfaßt einen geschwächten Bereich (10) in seiner Mitte, der ein Öffnen und Festbiegen des Teils ermöglicht;

c) der starre zweite Teil (7) ist mit zumindest einem Haken (11) zum Halten eines Drahtes (12) versehen;

d) der starre zweite Teil (7) ist mit zumindest einem Haken (11) zum Halten eines Drahtes (12) und einem Nocken (13) versehen, um den Draht (12) im Haken unten zu halten;

e) der starre zweite Teil (7) ist mit zumindest einem Haken (11) zum Halten eines Drahtes (12) und einem Nocken (13) versehen, der nahe dem Haken (11) vorgesehen ist, um den Draht (12) im Haken unten zu halten, wobei der Nocken (13) seitlich vom oberen Teil des Hakens (11) vorsteht.

## Revendications

1. Support de fil destiné à être utilisé sur un piquet en matière plastique pour treillis, comprenant des nervures (1a, 1b) formant des parties saillantes et s'étendant dans la direction longitudinale dudit piquet, pour recevoir des rangées de fils tendus destinées à supporter des vrilles ou des brindilles de plantes, ledit support de fil comprenant deux éléments distincts (6 et 7), un premier élément (6) étant pourvu d'au moins un logement pour une partie saillante d'une nervure et le second élément (7) coopérant avec le premier élément (6) pour fixer par coincement le premier élément (6) sur le piquet, caractérisé en ce que le premier élément (6) est flexible et présente un évidement destiné à recevoir la majeure partie de la section transversale du piquet, cet évidement étant bordé par deux bras, les parties d'extrémités libres (8) desdits bras comprenant, sur leur côté intérieur, les logements pour les parties saillantes des nervures (1b) du piquet et présentant, sur leur côté extérieur, des surfaces définissant des coins, le premier élément pouvant être encliqueté par déformation élastique autour du piquet pour que les bras retiennent le premier élément (6) sur le piquet, et en ce que le second élément (7) est rigide et possède une bouche d'insertion à extrémités ouvertes présentant intérieurement des surfaces (9) définissant des coins, qui coopèrent avec les surfaces du premier élément (6), qui définissent des coins, pour ainsi assurer entre le premier et le second éléments un assemblage avec blocage par effet de coin.

2. Support de fil selon la revendication 1, caractérisé en ce que ledit support de fil (5) comprend l'une au moins des caractéristiques suivantes:

a) le premier élément flexible (6) est réalisé en une matière thermoplastique;

b) le premier élément flexible (6) comprend une partie médiane affaiblie (10), permettant d'ouvrir ledit élément par déformation élastique;

c) le second élément rigide (7) est pourvu d'au moins un crochet (11) destiné à supporter un fil (12);

d) le second élément rigide (7) est pourvu d'au moins un crochet (11) destiné à supporter un fil (12) et d'une butée (13) destinée à maintenir le fil (12) à l'intérieur dudit crochet en le repoussant vers le bas;

e) le second élément rigide (7) est pourvu d'au moins un crochet (11) destiné à supporter un fil (12) et une butée (13) est prévue à proximité du crochet (11) pour maintenir le fil (12) à l'intérieur dudit crochet en le repoussant vers le bas, cette butée (13) saillant latéralement sur la partie supérieure du crochet (11).

_Fig. 1._

_Fig. 2._

_Fig. 3._